# EUROPÄISCHE PATENTSCHRIFT

(11) **EP 3 585 639 B1**
(45) Veröffentlichungstag und Bekanntmachung des Hinweises auf die Patenterteilung: **19.08.2026**
(21) Anmeldenummer: 18704518.2
(22) Anmeldetag: 08.02.2018
(51) Int. Cl.: B60L 1/00, H02J 1/00

(54) **VORRICHTUNG UND VERFAHREN ZUM BETREIBEN EINES KRAFTFAHRZEUGS, KRAFTFAHRZEUG**
DEVICE AND METHOD FOR OPERATING A MOTOR VEHICLE, AND MOTOR VEHICLE
DISPOSITIF ET PROCÉDÉ PERMETTANT DE FAIRE FONCTIONNER UN VÉHICULE AUTOMOBILE ET VÉHICULE AUTOMOBILE

(30) Priorität: 27.02.2017 DE 102017203147
(43) Veröffentlichungstag der Anmeldung: 01.01.2020
(73) Patentinhaber: Robert Bosch GmbH, 70442 Stuttgart (DE)
(72) Erfinder: MEYER, Thomas, 70186 Stuttgart (DE); BERNHARDT, Christian, 70327 Stuttgart (DE)
(86) Internationale Anmeldenummer: PCT/EP2018/053117
(87) Internationale Veröffentlichungsnummer: WO 2018/153679

(56) Entgegenhaltungen:
- EP-A1- 3 025 897
- JP-A- 2012 115 056
- US-A1- 2016 144 725

## Beschreibung

Die Erfindung betrifft eine Vorrichtung zum Betreiben eines Kraftfahrzeugs, das ein elektrisches Antriebssystem mit einem elektrischen Hochspannungs-Traktionsnetz sowie ein Betriebsnetz, das einen eine Leistungselektronik aufweisenden Hochspannungsteil sowie einen eine Steuerungselektronik aufweisenden Niederspannungsteil aufweist, und mit wenigstens einem ersten Transformator, der dazu ausgebildet ist, eine Eingangsspannung aus dem Betriebsnetz in eine erste, insbesondere höhere Ausgangsspannung für die Leistungselektronik zu wandeln.

Weiterhin betrifft die Erfindung ein Kraftfahrzeug mit einer derartigen Vorrichtung sowie ein Verfahren zum Betreiben des oben beschriebenen Kraftfahrzeugs, wobei eine Eingangsspannung aus dem Niederspannungsteil in eine erste, insbesondere höhere Ausgangsspannung für die Leistungselektronik mittels eines Transformators gewandelt wird.

### Stand der Technik

Vorrichtungen, Verfahren und Kraftfahrzeuge der eingangs genannten Art sind aus dem Stand der Technik bereits bekannt.

Heutige Kraftfahrzeuge weisen neben dem Betriebsnetz, das dem herkömmlichen Bordnetz im Wesentlichen entspricht und zur Versorgung von einfachen Elektronikkomponenten, wie beispielsweise der Innenraumbeleuchtung einem Unterhaltungssystem oder dergleichen dient, auch ein Traktionsnetz auf, das zur Versorgung eines elektrischen Antriebssystems mit Energie dient. Weil ein elektrisches Antriebssystem im Vergleich zu den sonstigen elektrischen/elektronischen Bauteilen eines Kraftfahrzeugs, die bisher durch das Bordnetz versorgt wurden, ein höheres elektrisches Spannungsniveau aufweist, müssen die beiden Netze, also das Traktionsnetz und das Betriebsnetz, galvanisch voneinander getrennt sein. Außerdem ist es bekannt, das Betriebsnetz in einen Niederspannungsteil und einen Hochspannungsteil zu trennen. Der Niederspannungsteil weist üblicherweise eine Steuerelektronik auf, welche beispielsweise auch die Steuerung und Überwachung des Traktionsnetzes übernimmt. Der Hochspannungsteil umfasst üblicherweise eine Leistungselektronik, die mit einer Betriebsspannung arbeiten kann, die der des Traktionsnetzes entspricht. Die Leistungselektronik ist dabei beispielsweise Teil des Traktionsnetzes oder dient dem Betrieb anderer Komponenten des Kraftfahrzeugs, die ein erhöhtes Spannungsniveau erfordern, wie beispielsweise eine Hochleistungsklimaanlage oder dergleichen.

Um einen sicheren Betriebs des Kraftfahrzeugs zu gewährleisten weisen üblicherweise sowohl das Betriebsnetz als auch das Traktionsnetz einen eigenen Energiespeicher auf. Der Energiespeicher des Betriebsnetzes weist dabei eine niedrigere Ausgangsspannung als der Energiespeicher des Hochspannungsteils beziehungsweise des Traktionsnetzes auf. Im Normalbetrieb wird das Kraftfahrzeug dadurch gestartet, dass zunächst das Betriebsnetz in Betrieb genommen wird, um Diagnosefunktionen durchzuführen, bevor auch das Traktionsnetz in Betrieb genommen wird.

Es ist bekannt, die Leistungselektronik über die Steuerungselektronik allein aus dem Betriebsnetz zu speisen. Dazu wird zwischen Niederspannungsteil und Hochspannungsteil zumindest ein Transformator/Übertrager eingesetzt, der die beiden Teile voneinander galvanisch trennt. Die Leistungselektronik ist dann insbesondere nur für Sensor- und Steuerungszwecke mit dem Traktionsnetz verbunden. Problematisch hierbei ist, dass bei Verlust oder Störung des Betriebsnetzes, die Steuerungselektronik durch den Hochspannungsteil nicht oder nur teilweise versorgt wird. Eine Versorgung des Steuerungsteils aus dem Hochleistungsteil ist nur für kurze Zeit und nur für bestimmte Teile des Steuerungsteils möglich. Dadurch werden aufwändige Steuerungen und Regelungen notwendig. Darüber hinaus ist dabei eine schwankende Versorgungsspannung aus dem Niederspannungsteil zu befürchten, wobei Spannungseinbrüche, ISO-Pulse, EMV-Emissionen und Immissionen, usw. berücksichtigt und durch technische Gegenmaßnahmen überwunden werden müssen, um auch trotz dieser Effekte einen fehlerfreien Betrieb des Kraftfahrzeugs zu gewährleisten.

Die Druckschrift EP 3 025 897 A1 offenbart ein elektrisches Leistungssystem eines Fahrzeugs mit einer Batterie und zwei Gleichspannungswandlern, wobei der erste Gleichspannungswandler die Spannung einer elektrischen Leistung tiefsetzt und der zweite Tiefsetzsteller die Spannung der elektrischen Leistung tiefsetzt. Die Druckschrift US 2016/0144725 A1 offenbart einen elektrischen Antriebsstrang eines Fahrzeugs mit zwei Gleichspannungswandlern.

### Offenbarung der Erfindung

Die erfindungsgemäße Vorrichtung mit den Merkmalen des Anspruchs 1 hat den Vorteil, dass die zuvor genannten Probleme überwunden und ein sicherer Betrieb des Kraftfahrzeugs gewährleistet wird. Dies wird erfindungsgemäß dadurch erreicht, dass die Vorrichtung wenigstens einen zweiten Transformator aufweist, der dazu ausgebildet ist, die Ausgangsspannung des ersten Transformators in eine zweite Ausgangsspannung für die Steuerungselektronik zu wandeln, wobei die zweite Ausgangsspannung höher als die Eingangsspannung des ersten Transformators ist. Über den ersten Transformator beziehungsweise Start-Übertrager wird initial die Leistungselektronik versorgt und durch den zweiten Transformator erfolgt die Übertragung elektrischer Leistung zur Versorgung der Steuerungselektronik mithilfe der zweiten Ausgangsspannung. Somit erfolgt die Versorgung des Steuerungsteils nur noch über den zweiten Übertrager und nicht mehr aus dem Betriebsnetz. Dadurch haben kritische Spannungsschwankungen insbesondere in der Steuerelektronik des Betriebsnetzes keine Auswirkungen und die Betriebssicherheit des Kraftfahrzeugs wird erhöht.

Weiterhin ist bevorzugt vorgesehen, dass die Vorrichtung eine Diagnoseeinheit aufweist, die mit einer Schalteinrichtung verbunden ist, mittels welcher das Traktionsnetz mit dem Hochspannungsteil elektrisch verbindbar ist. Die Diagnoseeinheit dient insbesondere dazu, die Funktion der Leistungselektronik und/oder Steuerungselektronik sowie des Traktionsnetzes zu überwachen. Nach der initialen Inbetriebnahme prüft die Diagnoseeinheit zunächst die Funktionsfähigkeit der wesentlichen Komponenten, insbesondere des Antriebssystems. Ergibt die Diagnose, dass keine oder zumindest keine kritischen Fehler vorliegen, so wird die Schalteinrichtung betätigt. Dabei wird das Traktionsnetz an den Hochspannungsteil elektrisch angeschlossen. Damit steht dem Hochspannungsteil, insbesondere an den zweiten Transformator auch die aus dem Hochspannungs-Energiespeicher bereitgestellte Energie zur Verfügung.

Damit kann jetzt die Leistungselektronik insgesamt aus dem Traktionsnetz mit Energie versorgt werden. Hierdurch können Spannungseinbrüche und unerwünschte EMV-Emissionen und dergleichen vermieden werden.

Weiterhin ist bevorzugt vorgesehen, dass eine erste Diodenanordnung vorhanden ist, die derart ausgebildet ist, dass die Leistungselektronik in Abhängigkeit von der Betriebsspannung das Traktionsnetz und der Ausgangsspannung des ersten Transformators entweder durch das Traktionsnetz oder durch das Betriebsnetz oder den Niederspannungsteil versorgt wird. Durch die Diodenanordnung wird somit eine automatische Umschaltung der Versorgungsspannung für die Leistungselektronik zur Verfügung gestellt. Ein aktives Umschalten oder eine aktive Steuerung/Regelung ist nicht notwendig, wodurch eine besonders einfache und kostengünstige Ausbringung der Vorrichtung gewährleistet wird.

Weiterhin ist bevorzugt vorgesehen, dass die Ausgangsspannung des ersten Transformators niedriger ist, als die kleinste zu erwartende Betriebsspannung des Traktionsnetzes. Damit erfolgt die automatische Umschaltung auf das Traktionsnetz, sobald dieses durch das Betätigung der Schaltereinrichtung angeschlossen wird.

Weiterhin ist bevorzugt vorgesehen, dass eine zweite Diodenanordnung vorhanden ist, die derart ausgebildet ist, dass die Steuerelektronik in Abhängigkeit von der Betriebsspannung des Niederspannungsteils und der Ausgangsspannung des zweiten Transformators entweder durch den Betriebsnetz oder durch den zweiten Transformator versorgt wird. Auch hier ist durch eine schalterfreie Ausbildung gewährleistet, dass ein automatisches Umschalten zwischen der Betriebsspannung des Niederspannungsteils und der Ausgangsspannung des zweiten Transformators automatisch erfolgt und eine stabile Versorgung der Steuerungselektronik gewährleistet ist.

Weiterhin ist bevorzugt vorgesehen, dass die Ausgangsspannung des zweiten Transformators höher ist als die höchste zu erwartende Betriebsspannung des Niederspannungsteils. Dadurch wird das automatische Umschalten auf einfache Art und Weise gewährleistet.

Weiterhin ist bevorzugt vorgesehen, dass der Steuerungselektronik und dem ersten Transformator ein Hochsetzsteller vorgeschaltet ist. Damit wird die Steuerungselektronik während des Anlaufs von dem Hochsetzsteller versorgt. Der Hochsetzsteller wird abgeschaltet sobald das Traktionsnetz hinzugeschaltet wurde. Dann sinkt die vom Hochsetzsteller zur Verfügung gestellte Spannung unter das Niveau der Ausgangsspannung des zweiten Transformators, sodass insbesondere der automatisierte Umschaltvorgang durch die vorteilhafte Diodenanordnung im Steuerungsteil sicher erfolgt. Das Abschalten des Hochsetzstellers kann über eine Softwarediagnose oder über eine Hardwareschaltung erfolgen. Beispielsweise ist dazu vorgesehen, dass am Eingang des Transformators der Betriebsstrom gemessen wird, wobei in Abhängigkeit von dem Betriebsstrom der Hochsetzsteller eingeschaltet wird.

Weiterhin ist bevorzugt vorgesehen, dass zwischen der Steuerungselektronik und dem zweiten Transformator eine Schalteinrichtung zwischengeschaltet ist. Mittels der Schalteinrichtung wird bevorzugt während des Anlaufvorgangs der Ausgang des zweiten Transformators von der Steuerungselektronik getrennt, sodass während des Anlaufs die elektrische Versorgung der Steuerungselektronik weiterhin über die Betriebsspannung des Niederspannungsteils realisiert wird. Erst nachdem Diagnose und Tests der Leistungselektronik abgeschlossen und das Traktionsnetz hinzugeschaltet sind, wird die Schalteinrichtung betätigt, um den zweiten Transformator mit der Steuerungselektronik zu verbinden. Auch hier kann die Position des Schalters beziehungsweise den Zustand der Schalteinrichtung über eine Softwarediagnose oder eine Hardwareschaltung, insbesondere eines Stromsensors am Eingang des ersten Transformators, wie zuvor beschrieben erfolgen. Dadurch wird gewährleistet, dass die Steuerungselektronik und die Leistungselektronik nach dem Hinzuschalten des Traktionsnetzes nur noch aus diesem versorgt werden.

Das Kraftfahrzeug mit den Merkmalen des Anspruchs 9 zeichnet sich durch die erfindungsgemäße Vorrichtung aus. Es ergeben sich hierdurch bereits genannten Vorteile.

Das erfindungsgemäße Verfahren mit den Merkmalen des Anspruchs 10, mittels dessen insbesondere das oben beschriebene Kraftfahrzeug betrieben wird, zeichnet sich dadurch aus, dass die Ausgangsspannung des ersten Transformators mittels eines zweiten Transformators in eine zweite Ausgangsspannung für die Steuerungselektronik gewandelt wird, wobei die zweite Spannung höher als die Eingangsspannung des ersten Transformators gewählt wird. Es ergeben sich hierdurch die bereits genannten Vorteile.

Weitere Vorteile und bevorzugt Merkmale und Merkmalskombinationen ergeben sich insbesondere aus dem zuvor Beschriebenen sowie aus den Ansprüchen.

Im Folgenden soll die Erfindung anhand der Zeichnung näher erläutert werden. Dazu zeigen:
- Figur 1: ein erstes Ausführungsbeispiel einer vorteilhaften Vorrichtung zum Betreiben eines Kraftfahrzeugs,
- Figur 2: ein zweites Ausführungsbeispiel der Vorrichtung,
- Figur 3: ein drittes Ausführungsbeispiel der Vorrichtung, und
- Figur 4: ein viertes Ausführungsbeispiel der Vorrichtung, jeweils als vereinfachter Schaltplan.

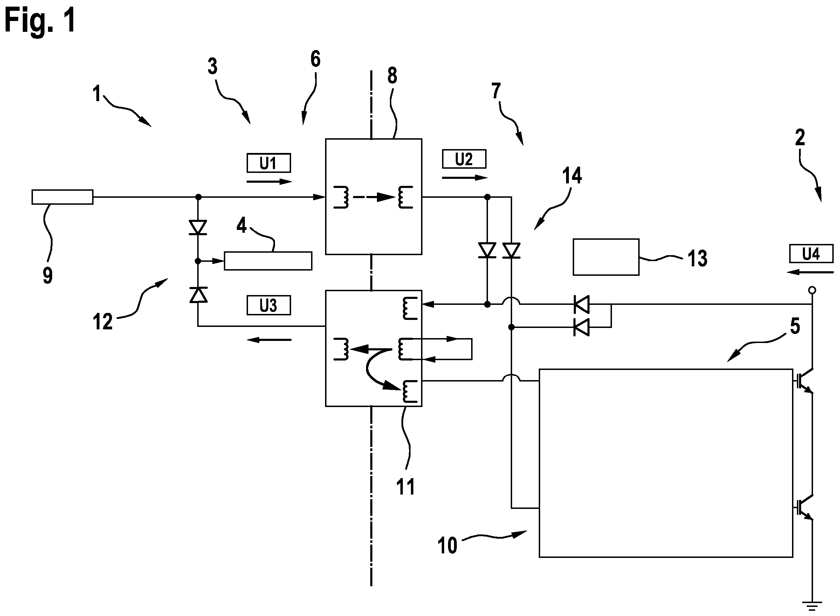

Figur 1 zeigt in einem vereinfachten Schaltplan eine vorteilhafte Vorrichtung 1 zum Betreiben eines hier nicht näher dargestellten Kraftfahrzeugs, das ein elektrisches Antriebssystem aufweist. Das Antriebssystem weist ein Hochspannungs-Traktionsnetz 2 auf, das insbesondere eine elektrische Antriebsmaschine sowie einen Hochspannungs-Energiespeicher aufweist. Weiterhin weist das Antriebssystem ein Betriebsnetz 3 auf, das dem herkömmlichen Bordnetz eines Kraftfahrzeugs ähnlich ist und eine Steuerungselektronik 4 sowie eine Leistungselektronik 5 aufweist. Dabei ist die Steuerungselektronik 4 in einem Niederspannungsteil 6 und die Leistungselektronik 5 in einem Hochspannungsteil 7 des Betriebsnetzes 3 angeordnet, wobei der Niederspannungsteil 6 und der Hochspannungsteil 7 durch einen Übertrager beziehungsweise Transformator 8 miteinander verbunden und ansonsten galvanisch voneinander getrennt sind. Auch das Betriebsnetz 3 weist einen elektrischen Speicher 9 auf, der im Niederspannungsteil 6 angeordnet ist, und die Betriebsspannung U1 für das Betriebsnetz 3 zur Verfügung stellt. Der Transformator 8 erhält somit als Eingangsspannung die Betriebsspannung U1 und wandelt diese in eine Ausgangsspannung U2,. Durch die Ausgangsspannung U2 wird die Leistungselektronik 5 des Hochspannungsteils 7 versorgt, wobei die Leistungselektronik 5 durch eine geeignete Steuerung/Regelung 10 - hier nicht näher gezeigt - betrieben wird.

Während des Anlaufvorgangs wird mittels der Ausgangsspannung U2 auch ein zweiter Transformator 11, versorgt. Aus diesem erfolgt die Übertragung der elektrischen Energie zur Versorgung der Steuerungselektronik 4 mithilfe einer Ausgangsspannung U3. Der Transformator 11 ist dabei derart ausgebildet, dass die Spannung U3 stets größer ist als die Spannung U1. Der Steuerungseinrichtung 4 ist dabei eine Diodenschaltung 12 vorgeschaltet, die sicherstellt, dass die Steuerelektronik 4 während des Anlaufvorgangs durch die Betriebsspannung U1 und in allen anderen Betriebszuständen allein durch die Ausgangsspannung U3 versorgt beziehungsweise betrieben wird.

Das Antriebssystem weist weiterhin eine Diagnoseeinrichtung 13 auf, die in Figur 1 nur vereinfacht dargestellt ist. Mittels der Diagnoseeinrichtung werden Tests/Diagnosen während des Anlaufs durchgeführt, mittels derer insbesondere der Leistungsteil beziehungsweise die Leistungselektronik 5 überwacht wird. Die Diagnoseeinheit 13 ist dabei mit einer Schaltereinrichtung (in Figur 1 nicht gezeigt) verbunden, mittels welcher das Traktionsnetz 2 mit dem Hochspannungsteil 7 verbindbar ist. Das Traktionsnetz 2 weist dabei eine Spannung U4 auf, die beispielsweise der Betriebsspannung beziehungsweise Ausgangsspannung des Hochspannungs-Energiespeichers entspricht.

Wenn die Diagnoseeinheit 13 ihre Tests abgeschlossen und in die Funktionsfähigkeit des Leistungsteils 5 erkannt hat, betätigt sie die Schaltereinrichtung um das Traktionsnetz 2 zuzuschalten und insbesondere mit dem Transformator 11 zu verbinden. Durch die Ausgestaltung der Vorrichtung 1 ist sichergestellt, dass die Betriebsspannung U4 stets größer ist als die Ausgangsspannung U2. Durch eine weitere Diodenanordnung 14, die dem Transformator 11 vorgeschaltet ist, wird sichergestellt, dass dieser stets mit der höheren der beiden Spannungen von U2 und U4 betrieben wird. Somit ist gewährleistet, dass die Steuerungselektronik 4 und die Leistungselektronik 5 nach dem Hinzuschalten des Traktionsnetzes 2 nur noch aus diesem versorgt werden. Insbesondere die Transformatoren 8 und 11 sowie deren Verschaltung in der Vorrichtung 1 bilden eine Vorrichtung, die einen sicheren Betrieb des Kraftfahrzeugs gewährleistet.

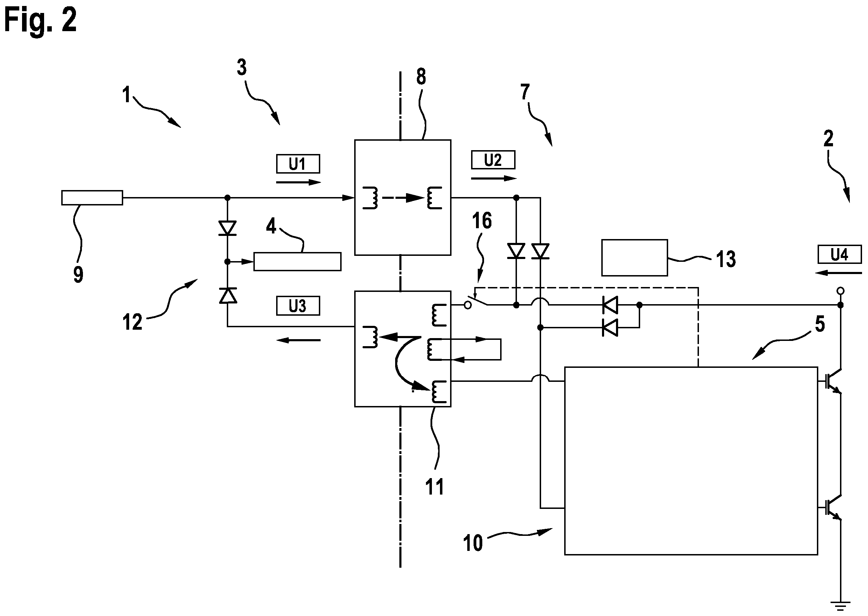

Figur 2 zeigt ein zweites Ausführungsbeispiel, das sich von dem ersten Ausführungsbeispiel dadurch unterscheidet, dass dem Transformator 11 eine Schaltereinrichtung 16 vorgeschaltet ist, durch welche das Traktionsnetz 4 hinzugeschaltet oder von dem Transformator 11 getrennt werden kann.

Während des Anlaufvorgangs wird die Spannung U1 aus dem Niederspannungsteil an den Transformator 8 angelegt, der daraus die Spannung U2 erzeugt. Mithilfe dieser Ausgangsspannung U2 werden alle Tests und Diagnosen durchgeführt. Nachdem die Diagnosen und Tests der Leistungselektronik 5 erfolgreich abgeschlossen sind, wird das Traktionsnetz 2 mit der Spannung U4 hinzugeschaltet. Ist dies gewährleistet, kann der normale Betrieb der Leistungselektronik 5 aufgenommen werden. Dabei ist über die vorteilhafte Ausbildung sichergestellt, dass die Spannung U4 stets größer ist als die Ausgangsspannung U2. Sobald die Spannung U4 beziehungsweise das Traktionsnetz 2 hinzugeschaltet wird, kann die Leistungselektronik 5 den Transformator 11 hinzuschalten, der die Spannung U3 erzeugt, und damit die Steuerungselektronik 4 versorgt. Auch hierbei ist sicherzustellen, dass die Ausgangsspannung U3 größer ist als die Eingangsspannung U1.

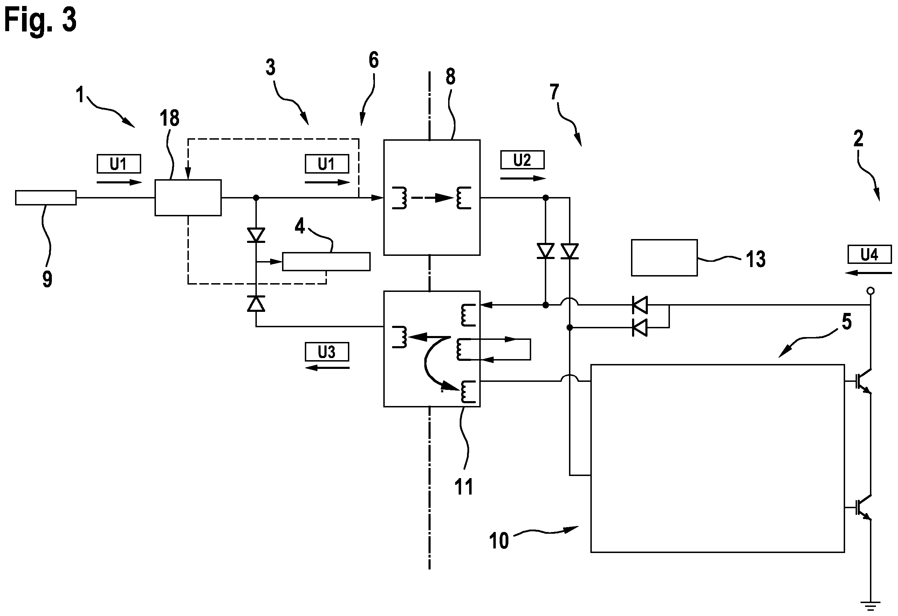

Figur 3 zeigt ein drittes Ausführungsbeispiel, das sich von dem ersten Ausführungsbeispiel dadurch unterscheidet, dass dem Transformator 8 und der Steuerungselektronik 4 ein Hochsetzsteller 18 vorgeschaltet ist. Diese Variante kann auch bei dem zweiten Ausführungsbeispiel eingesetzt werden. Die Steuerungselektronik wird somit über den Hochsitzsteller 18 während des Anlaufs versorgt, der aus der aus dem Niedervoltspannungsteil 6 kommenden Betriebsspannung U1 eine Betriebsspannung U1' erzeugt. Die Spannung U1' wird während des Anlaufvorgangs an den Start-Übertrager beziehungsweise Transformator 8 angelegt, der daraus die Spannung U2 erzeugt, welche die Leistungselektronik 5 versorgt. Während des Anlaufvorgangs wird mit der übertragenen Leistung aus dem Start-Übertrager auch der Transformator 11 versorgt. Dieser erzeugt die Spannung U3, die kleiner ist als die Betriebsspannung U1'.

Nachdem die Diagnosen und Tests der Leistungselektronik 5 erfolgreich abgeschlossen wurden, wird das Traktionsnetz 2 mit der Spannung U4 hinzugeschaltet. Sobald dies erfolgt, wird der Hochsitzsteller 18 abgeschaltet. Damit sinkt die Spannung U1' zurück auf das Niveau der Spannung U1, sodass die Eingangsspannung für die Steuerungselektronik 4 und den Transformator 8 sicher unterhalb der Spannung U3 liegt. Dies hat zur Folge, dass mittels der Diodenschaltung 12 sichergestellt wird, dass die Steuerelektronik 4 durch die Betriebsspannung U3 betrieben wird. Die Abschaltung des Hochsetzstellers 18 kann über eine Softwarediagnose erfolgen, oder über eine Hardware-Schaltung, die beispielsweise einen Strommesssensor am Eingang des Transformators 8 aufweist. Somit kann gewährleistet werden, dass die Steuerungselektronik 4 und die Leistungselektronik 5 nach dem Hinzuschalten des Traktionsnetzes 2 einzig aus diesem versorgt werden.

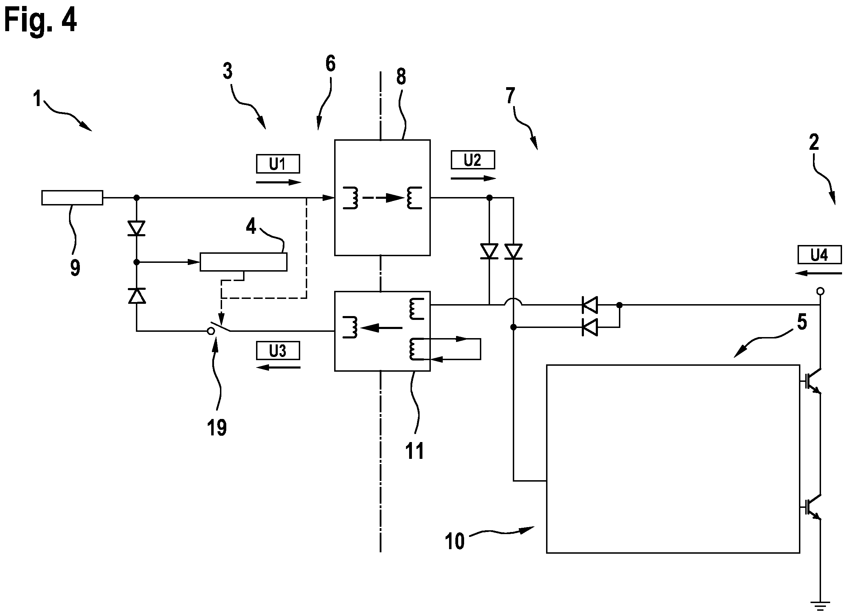

Figur 4 zeigt ein viertes Ausführungsbeispiel, das sich von den vorhergehenden Ausführungsbeispielen insbesondere dadurch unterscheidet, dass zwischen der Steuerungselektronik 4 und dem Transformator 11 ein betätigbarer Schalter zwischengeschaltet ist. Dieser ist auch bei einer Gestaltung der Vorrichtung gemäß einem der Ausführungsbeispiele 1 oder 4 mit zwei Übertragern einsetzbar. An den Startübertrager beziehungsweise den Transformator 8 wird während des Anlaufvorgangs die Spannung U1 aus dem Niederspannungsteil 6 angelegt. Dieser erzeugt daraus die erste Spannung U2, welche die Leistungselektronik 5 versorgt. Während des Anlaufvorgangs wird mit der übertragenen Leistung über den Startübertrager der Transformator 11 versorgt. Hieraus erfolgt die Übertragung der elektrischen Leistung zur Versorgung der Steuerungselektronik 4 mithilfe der Ausgangsspannung U3. Die Spannung U3 ist allerdings während des Anlaufvorgangs vorliegend mittels des Schalters 19 von der Steuerungselektronik 4 getrennt, sodass während des Anlaufs die Versorgung der Steuerungselektronik 4 weiterhin durch die Betriebsspannung U1 realisiert wird. Nachdem die Diagnosen und Tests der Leistungselektronik 5 erfolgreich abgeschlossen sind, wird das Traktionsnetz 2 wie zuvor mit der Spannung U4 hinzugeschaltet. Danach wird der Schalter 19 geschlossen, sodass die Steuerungselektronik 4 infolge der Diodenschaltung 12 anschließend durch die Betriebsspannung U3 versorgt wird. Auch hier ist U3 zweckmäßigerweise größer gewählt als die Spannung U1. Die Position des Schalters 19 wird bevorzugt über eine Softwarediagnose vorgegeben oder über einer Hardware-Schaltung, die beispielsweise den zuvor genannten Strommesssensor umfasst. Dadurch wird gewährleistet, dass die Steuerungselektronik 4 und die Leistungselektronik 5 nach Anlegen der Spannung U4 beziehungsweise nach Hinzuschalten des Traktionsnetzes 2 einzig nur noch aus diesem versorgt werden.

## Patentansprüche

1. Vorrichtung (1) zum Betreiben eines
Kraftfahrzeugs, das ein elektrisches Antriebssystem mit einem elektrischen hochspannungs-Traktionsnetz (2) und ein Betriebsnetz (3) aufweist,
wobei die Vorrichtung in dem Betriebsnetz (3) einen, eine Leistungselektronik (5) aufweisenden, Hochspannungsteil (7) sowie einen, eine Steuerungselektronik (4) aufweisenden, Niederspannungsteil (6) aufweist,
sowie wenigstens einen ersten Übertrager (8), der dazu ausgebildet ist, eine Eingangsspannung (U1) aus dem Niederspannungsteil (6) in eine erste, insbesondere höhere Ausgangsspannung (U2) für die Leistungselektronik (5) zu wandeln,
**dadurch gekennzeichnet,**
**dass** die Vorrichtung wenigstens einen zweiten Übertrager (11) aufweist, der dazu ausgebildet ist, die erste Ausgangsspannung (U2) des ersten Übertragers (8) in eine zweite Ausgangsspannung (U3) für die Steuerungselektronik (4) zu wandeln, wobei die zweite Ausgangsspannung (U3) höher ist als die Eingangsspannung (U1).

2. Vorrichtung nach Anspruch 1, **dadurch gekennzeichnet, dass** sie eine Diagnoseeinheit (13) aufweist, die dazu ausgebildet ist, den Betrieb des Betriebsnetzes (3) zu überwachen, wobei die Diagnoseeinheit (13) mit einer Schalteinrichtung verbunden ist, mittels welcher das Traktionsnetz mit dem Hochspannungsteil (7) elektrisch verbindbar ist.

3. Vorrichtung nach einem der vorhergehenden Ansprüche, **gekennzeichnet durch** eine erste Diodenanordnung (14), die derart ausgebildet ist, dass die Leistungselektronik (5) in Abhängigkeit von der Betriebsspannung (U4) des Traktionsnetzes (2) und der Ausgangsspannung (U2) des ersten Übertragers (8) entweder **durch** das Traktionsnetz (2) oder **durch** das Betriebsnetz (3) versorgt wird.

4. Vorrichtung nach einem der vorhergehenden Ansprüche, **dadurch gekennzeichnet, dass** die Ausgangsspannung (U2) des ersten Übertragers (8) niedriger ist als die kleinste zu erwartende Betriebsspannung des Traktionsnetzes (2).

5. Vorrichtung nach einem der vorhergehenden Ansprüche, **gekennzeichnet durch** eine zweite Diodenanordnung (12), die derart ausgebildet ist, dass die Steuerelektronik (4) in Abhängigkeit von der Betriebsspannung (U1) des Niederspannungsteils (6) und der Ausgangsspannung (U3) des zweiten Übertragers (11) entweder **durch** den Niederspannungsteil (6) oder **durch** den zweiten Übertrager (11) versorgt wird.

6. Vorrichtung nach einem der vorhergehenden Ansprüche, **dadurch gekennzeichnet, dass** die Ausgangsspannung (U3) des zweiten Übertragers (11) höher ist als die höchste zu erwartende Betriebsspannung des Niederspannungsteils (6).

7. Vorrichtung nach einem der vorhergehenden Ansprüche, **dadurch gekennzeichnet, dass** der Steuerungselektronik (4) und dem ersten Übertrager (8) ein Hochsetzsteller (18) vorgeschaltet ist.

8. Vorrichtung nach einem der vorhergehenden Ansprüche, **dadurch gekennzeichnet, dass** zwischen der Steuerungselektronik (4) und dem zweiten Übertrager (11) ein betätigbarer Schalter (19) zwischengeschaltet ist.

9. Kraftfahrzeug, das ein elektrisches Antriebssystem mit einem elektrischen hochspannungs-Traktionsnetz (2) und ein Betriebsnetz (3) aufweist, **gekennzeichnet durch** eine Vorrichtung nach einem der Ansprüche 1 bis 8.

10. Verfahren zum Betreiben
eines Kraftfahrzeugs, das ein elektrisches Antriebssystem mit einem elektrischen Hochspannungstraktionsnetz (2) und ein Betriebsnetz (3) aufweist,
wobei das Betriebsnetz (3) einen eine Leistungselektronik (5) aufweisenden Hochspannungsteil (7) sowie einen eine Steuerungselektronik (4) aufweisenden Niederspannungsteil (6) aufweist,
wobei eine Eingangsspannung aus dem Niederspannungsteil durch einen ersten Übertrager (8) in eine erste, insbesondere höhere Ausgangsspannung (U2) für die Leistungselektronik (5) gewandelt wird,
**dadurch gekennzeichnet,**
**dass** die Ausgangsspannung (U2) des ersten Übertragers (8) in eine zweite Ausgangsspannung (U3) für die Steuerungselektronik (4) gewandelt wird, wobei die zweite Ausgangsspannung (U3) höher als die Eingangsspannung (U1) gewählt wird.

## Claims

1. Device (1) for operating a
motor vehicle comprising an electrical drive system with an electrical high-voltage traction network (2) and an operating network (3),
wherein the device comprises a high-voltage part (7) having a power electronics system (5) and a low-voltage part (6) having a control electronics system (4) in the operating network (3),
and comprising at least one first transformer (8) configured to convert an input voltage (U1) from the low-voltage part (6) into a first, in particular higher, output voltage (U2) for the power electronics system (5),
**characterized**
**in that** the device comprises at least one second transformer (11) configured to convert the first output voltage (U2) of the first transformer (8) into a second output voltage (U3) for the control electronics system (4), wherein the second output voltage (U3) is higher than the input voltage (U1).

2. Device according to Claim 1, **characterized in that** it has a diagnostic unit (13) configured to monitor the operation of the operating network (3), wherein the diagnostic unit (13) is connected to a switching device, by means of which the traction network can be electrically connected to the high-voltage part (7).

3. Device according to one of the preceding claims, **characterized by** a first diode arrangement (14) configured in such a manner that the power electronics system (5) is supplied either by the traction network (2) or by the operating network (3) depending on the operating voltage (U4) of the traction network (2) and the output voltage (U2) of the first transformer (8).

4. Device according to one of the preceding claims, **characterized in that** the output voltage (U2) of the first transformer (8) is lower than the lowest expected operating voltage of the traction network (2).

5. Device according to one of the preceding claims, **characterized by** a second diode arrangement (12) configured in such a manner that the control electronics system (4) is supplied either by the low-voltage part (6) or by the second transformer (11) depending on the operating voltage (U1) of the low-voltage part (6) and the output voltage (U3) of the second transformer (11).

6. Device according to one of the preceding claims, **characterized in that** the output voltage (U3) of the second transformer (11) is higher than the highest expected operating voltage of the low-voltage part (6).

7. Device according to one of the preceding claims, **characterized in that** a boost converter (18) is connected upstream of the control electronics system (4) and the first transformer (8).

8. Device according to one of the preceding claims, **characterized in that** an actuatable switch (19) is interposed between the control electronics system (4) and the second transformer (11).

9. Motor vehicle comprising an electrical drive system with an electrical high-voltage traction network (2) and an operating network (3), **characterized by** a device according to one of Claims 1 to 8.

10. Method for operating
a motor vehicle comprising an electrical drive system with an electrical high-voltage traction network (2) and an operating network (3),
wherein the operating network (3) comprises a high-voltage part (7) having a power electronics system (5) and a low-voltage part (6) having a control electronics system (4),
wherein an input voltage from the low-voltage part is converted by a first transformer (8) into a first, in particular higher, output voltage (U2) for the power electronics system (5),
**characterized**
**in that** the output voltage (U2) of the first transformer (8) is converted into a second output voltage (U3) for the control electronics system (4), wherein the second output voltage (U3) is selected to be higher than the input voltage (U1).

## Revendications

1. Dispositif (1) permettant de faire fonctionner
un véhicule automobile qui présente un système d'entraînement électrique muni d'un réseau de traction électrique haute tension (2), ainsi qu'un réseau de service (3),
le dispositif présentant, dans le réseau de service (3), une partie haute tension (7) munie d'une électronique de puissance (5) et une partie basse tension (6) munie d'une électronique de commande (4),
ainsi qu'au moins un premier transformateur (8) qui est conçu pour convertir une tension d'entrée (U1) provenant de la partie basse tension (6) en une première tension de sortie (U2), en particulier plus élevée, pour l'électronique de puissance (5),
**caractérisé en ce que**
le dispositif présente au moins un second transformateur (11) qui est conçu pour convertir la première tension de sortie (U2) du premier transformateur (8) en une seconde tension de sortie (U3) pour l'électronique de commande (4), la seconde tension de sortie (U3) étant plus élevée que la tension d'entrée (U1).

2. Dispositif selon la revendication 1, **caractérisé en ce qu'**il présente une unité de diagnostic (13) qui est conçue pour surveiller le fonctionnement du réseau de service (3), l'unité de diagnostic (13) étant reliée à un dispositif de commutation au moyen duquel le réseau de traction peut être relié électriquement à la partie haute tension (7).

3. Dispositif selon l'une quelconque des revendications précédentes, **caractérisé par** un premier agencement de diodes (14) qui est conçu de telle sorte que l'électronique de puissance (5) est alimentée soit par le réseau de traction (2), soit par le réseau de service (3) en fonction de la tension de service (U4) du réseau de traction (2) et de la tension de sortie (U2) du premier transformateur (8).

4. Dispositif selon l'une quelconque des revendications précédentes, **caractérisé en ce que** la tension de sortie (U2) du premier transformateur (8) est inférieure à la tension de service la plus basse attendue du réseau de traction (2).

5. Dispositif selon l'une quelconque des revendication précédentes, **caractérisé par** un second agencement de diodes (12) qui est conçu de telle sorte que l'électronique de commande (4) est alimentée soit par la partie basse tension (6), soit par le second transformateur (11) en fonction de la tension de service (U1) de la partie basse tension (6) et de la tension de sortie (U3) du second transformateur (11).

6. Dispositif selon l'une quelconque des revendication précédentes, **caractérisé en ce que** la tension de sortie (U3) du second transformateur (11) est plus élevée que la tension de service attendue la plus élevée de la partie basse tension (6).

7. Dispositif selon l'une quelconque des revendication précédentes, **caractérisé en ce qu'**un convertisseur élévateur (18) est monté en amont de l'électronique de commande (4) et du premier transformateur (8).

8. Dispositif selon l'une quelconque des revendications précédentes, **caractérisé en ce qu'**un commutateur actionnable (19) est interposé entre l'électronique de commande (4) et le second transformateur (11).

9. Véhicule automobile qui présente un système d'entraînement électrique muni d'un réseau de traction électrique haute tension (2), ainsi qu'un réseau de service (3), **caractérisé par** un dispositif selon l'une quelconque des revendication 1 à 8.

10. Procédé permettant de faire fonctionner
un véhicule automobile qui présente un système d'entraînement électrique muni d'un réseau de traction électrique haute tension (2), ainsi qu'un réseau de service (3),
le réseau de service (3) présentant une partie haute tension (7) munie d'une électronique de puissance (5), ainsi qu'une partie basse tension (6) munie d'une électronique de commande (4),
une tension d'entrée provenant de la partie basse tension étant convertie par un premier transformateur (8) en une première tension de sortie (U2), en particulier plus élevée, pour l'électronique de puissance (5),
**caractérisé en ce que**
la tension de sortie (U2) du premier transformateur (8) est convertie en une seconde tension de sortie (U3) pour l'électronique de commande (4), la seconde tension de sortie (U3) étant choisie plus élevée que la tension d'entrée (U1).
